# EUROPEAN PATENT APPLICATION

(11) **EP 4 109 784 A1**
(43) Date of publication of application: **28.12.2022**
(21) Application number: 20920041.9
(22) Date of filing: 21.02.2020
(51) Int. Cl.: H04B 10/116

(54) **VISIBLE LIGHT COMMUNICATION NETWORK**

(71) Applicant: GUANGDONG OPPO MOBILE TELECOMMUNICATIONS CORP., LTD., Dongguan, Guangdong 523860 (CN); Tsinghua University, Haidian District, Beijing 100084 (CN)
(72) Inventor: ZHENG, Di, Beijing 100084 (CN); ZHANG, Hongming, Beijing 100084 (CN); YANG, Hui, Beijing 100084 (CN); SONG, Jian, Beijing 100084 (CN); SHEN, Jia, Dongguan, Guangdong 523860 (CN); XU, Jing, Dongguan, Guangdong 523860 (CN)
(74) Representative: Taor, Simon Edward William
(86) International application number: PCT/CN2020/076245
(87) International publication number: WO 2021/164016

(57) **Abstract**

Embodiments of the present disclosure provides a visible light communication network. The visible light communication network includes a plurality of optical network nodes, any two optical network nodes of the plurality of optical network nodes are connected through an optical connection, the plurality of optical network nodes form at least one optical communication link, and each of the at least one optical communication link includes at least part of the plurality of optical network nodes. A first optical network node is configured to communicate an optical signal with an other optical network node through an optical connection between the first optical network node and the other optical network node, and the first optical network node is any optical network node in the optical communication link.

## Description

### TECHNICAL FIELD

The present application relates to the technical field of visible light communication, and in particular, to a visible light communication network.

### BACKGROUND

The visible light communication network usually uses a star topology. Each node in the network is connected to a central node in a point-to-point manner, and the central node transmits information from a source node to a destination node. In such kind of network structure, the communication between any two nodes must go through the central node. Therefore, the central node has a large load and a high computational complexity, and the network is not easy to expand.

### SUMMARY

Embodiments of the present disclosure provide a visible light communication network in order to solve the problem in the related art.

To achieve the above objective, the technical solution of the embodiments of the present disclosure is implemented as follows.

An embodiment of the present disclosure provides a visible light communication network including a plurality of optical network nodes, and the plurality of optical network nodes form at least one optical communication link, each of the at least one optical communication link includes at least part of the plurality of optical network nodes, and two adjacent optical network nodes in the optical communication link are connected by an optical connection,
wherein a first optical network node is configured to communicate an optical signal with an other optical network node through an optical connection between the first optical network node and the other optical network node, and
wherein the first optical network node is any optical network node in the optical communication link.

In an optional embodiment of the present disclosure, the optical connection between the two adjacent optical network nodes in the optical communication link includes one of optical alignment, optical fiber, optical pipe, dielectric waveguide.

In an optional embodiment of the present disclosure, the first optical network node is configured to:
receive a first optical signal transmitted by the second optical network node based on an optical connection between the first optical network node and the second optical network node,
convert the first optical signal into a first electrical signal,
process the first electrical signal to obtain a second electrical signal,
convert the second electrical signal into a second optical signal, and
transmit the second optical signal to a third optical network node based on an optical connection between the first optical network and the third optical network node.

In an optional embodiment of the present disclosure, the first optical network node includes at least one communication assembly, the at least one communication assembly respectively correspond to the other optical network node optically connected to the first optical network node, and each communication assembly includes a photoelectric conversion module, an electrical signal processing module and a light source module, wherein:
the photoelectric conversion module is configured to receive the first optical signal, convert the first optical signal into the first electrical signal, and transmit the first electrical signal to the electrical signal processing module;
the electrical signal processing module is configured to process the first electrical signal to obtain the second electrical signal, and transmit the second electrical signal to the light source module in the communication assembly corresponding to the destination optical network node corresponding to the first optical signal; and
the light source module is configured to convert the second electrical signal into the second optical signal and transmit the second optical signal.

In an optional embodiment of the present disclosure, the photoelectric conversion module is implemented by a photodiode (PD) or an avalanche photodiode (APD).

In an optional embodiment of the present disclosure, the light source module is implemented by a light emitting diode LED or a laser diode LD.

In an optional embodiment of the present disclosure, the visible light communication network further includes a plurality of node devices, and each of the plurality of node devices is electrically connected to a corresponding optical network node,
wherein a first node device is configured to receive a third electrical signal transmitted by the first optical network node electrically connected to the first node device, and the third electrical signal is obtained by the first optical network node converting a third optical signal received into an electrical signal.

In an optional embodiment of the present disclosure, the first node device is further configured to transmit a fourth electrical signal to the first optical network node, and
the first optical network node is further configured to process the fourth electrical signal, convert the fourth electrical signal processed into a fourth optical signal, and transmit the fourth electrical signal to the other optical network node based on the optical connection between the first optical network node and the other optical network node.

In an optional embodiment of the present disclosure, the electrical signal processing module includes an amplifying unit and a light source driving unit; wherein,
the amplifying unit is configured to amplify the first electrical signal, and transmit the first electrical signal amplified to the light source driving unit, and
the light source driving unit is configured to drive the first electrical signal amplified to obtain the second electrical signal.

In an optional embodiment of the present disclosure, the first node device is connected to an output end of the amplifying unit and an input end of the light source driving unit of the first optical network node.

In the visible light communication network provided by an embodiment of the present disclosure, the visible light communication network includes a plurality of optical network nodes, the plurality of optical network nodes form at least one optical communication link, each of the at least one optical communication link includes at least part of the plurality of optical network nodes, two adjacent optical network nodes in the optical communication link are connected by an optical connection, a first optical network node is configured to communicate an optical signal with an other optical network node through an optical connection between the first optical network node and the other optical network node, and the first optical network node is any optical network node in the optical communication link.

By adopting the technical solution of the embodiments of the present disclosure, at least one optical communication link is formed through a plurality of optical network nodes, and the optical communication link may be formed between any two optical network nodes in the visible light communication network. Each optical network node (such as the first optical network node) communicates an optical signal through an optical connection to the other optical network node. An intermediate optical network node (which is not a source optical network node firstly transmitting the optical signal and a destination optical network node which the optical signal finally is to reach) can play a relay role to realize the transmission of the optical signal between any two optical network nodes in the visible light communication network. The embodiment of the present disclosure adopts a "bus" network topology to avoid the problems of a heavy load and high computational complexity of the central node, and difficult network expansion caused by the use of a star network topology. The embodiment of the present disclosure can design an optical communication link based on actual requirements, and can realize a complex network structure, so that the visible light communication network of the embodiment of the present disclosure has a better expansion performance.

### BRIEF DESCRIPTION OF THE DRAWINGS

FIG. 1 is a schematic structural diagram of a visible light communication network according to an embodiment of the present disclosure;
FIG. 2 is a schematic diagram of the composition and structure of an optical network node in a visible light communication network according to an embodiment of the present disclosure; and
FIG. 3 is a schematic diagram of interaction between an optical network node and a node device in a visible light communication network according to an embodiment of the present disclosure.

### DETAILED DESCRIPTION

The present disclosure will be described in further detail below with reference to the accompanying drawings and specific embodiments.

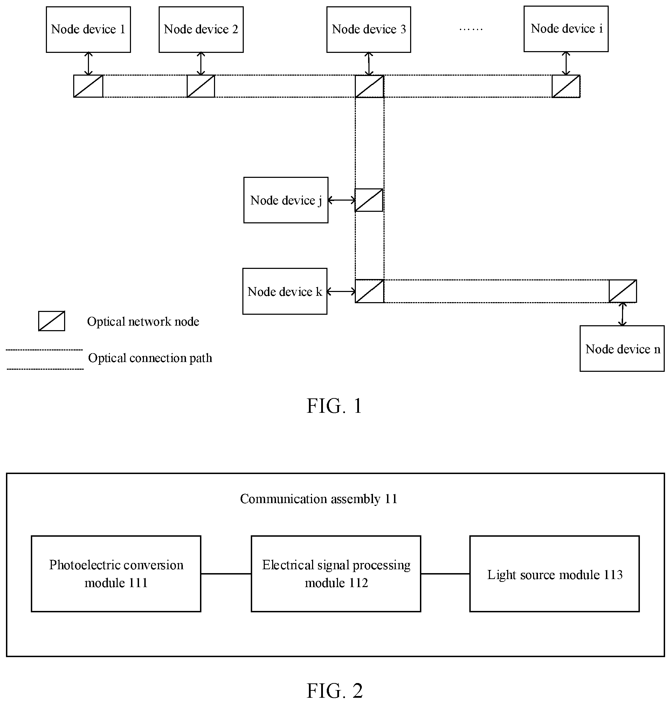

An embodiment of the present disclosure provides a visible light communication network. FIG. 1 is a schematic diagram of the architecture of a visible light communication network according to an embodiment of the disclosure. As shown in FIG. 1, the visible light communication network includes a plurality of optical network nodes, the plurality of optical network nodes form at least one optical communication link, each optical communication link includes at least part of the plurality of optical network nodes, and two adjacent optical network nodes in the optical communication link are connected by an optical connection.

A first optical network node is configured to communicate an optical signal with an other optical network node through an optical connection between the first optical network node and the other optical network node.

The first optical network node is any optical network node in the optical communication link.

The plurality of optical network nodes in an embodiment of the present disclosure form the visible light communication network like a bus topology, and each optical communication link may be analogous to a "bus". As shown in FIG. 1, when the visible light communication network includes node devices such as a node device 1 to a node device n, and each node device corresponds to an optical network unit, the optical connection between the optical network units is shown in FIG. 1. The optical communication link may be determined according to a source optical network unit and a destination optical network unit for an optical signal (that is, the optical signal needs to be sent from the source optical network unit to the destination optical network unit). Therefore, the optical communication link may be formed between any two optical network units in the visible light communication network. For example, the optical signal is to be sent from the optical network unit corresponding to the node device 1 to the optical network unit corresponding to the node device i, then the optical connection path formed by the optical network nodes corresponding to the node devices 1 to i may be used as an optical communication link. For another example, the optical signal is to be sent from the optical network unit corresponding to the node device 3 to the optical network unit corresponding to the node device n, then the optical connection path formed by the optical network nodes corresponding to the node devices 3, j, k to n may be used as another optical communication link. The embodiment of the present disclosure is suitable for complex network structures, and may design the optical communication link based on actual requirements to establish the optical connection between the optical network nodes in the optical communication link and to realize the transmission of the optical signal in the optical communication link. In addition, the visible light communication network of the embodiment of the present disclosure has good extension, and the optical network nodes and corresponding node devices may be added according to actual requirements.

In an embodiment of the present disclosure, the optical connection between two adjacent optical network nodes in the optical communication link includes one of optical alignment, optical fiber, optical pipe, dielectric waveguide.

In an embodiment, the optical connection between the two adjacent optical network nodes in the optical communication link is optical alignment. It may be understood that the optical signal transmitted by one optical network node may be received by another optical network node, which indicates that the two optical network nodes are optically aligned. As an example, the relative position between two optical network nodes that are optically connected may be set so that an optical receiver of said another optical network node is located on the optical path of the optical signal sent by the one optical network node, allowing the another optical network node to receive the optical signal sent by the one optical network node, that is, the above two optical network nodes realize optical alignment.

In another embodiment, two optical network nodes that are optically connected may be connected by optical fiber or optical pipe.

In yet another embodiment, two optical network nodes that are optically connected may be connected through a dielectric waveguide. The dielectric waveguide is a waveguide structure formed by a medium, and is a structural unit of an integrated optical system and components thereof. The dielectric waveguide has the function of transmitting optical signals.

It should be noted that although the implementation manners of the above-mentioned optical connection are listed in the embodiment of the present disclosure, the embodiments of the present disclosure are not limited to the above-mentioned implementation manners, and other manners that can realize the optical connection can all fall within the protection scope of the embodiments of the present disclosure.

In an embodiment of the present disclosure, the first optical network node is configured to: receive a first optical signal transmitted by a second optical network node based on an optical connection between the first optical network node and the second optical network node, convert the first optical signal into a first electrical signal, process the first electrical signal to obtain a second electrical signal, convert the second electrical signal into a second optical signal, and transmit the second optical signal to a third optical network node based on an optical connection between the first optical network and the third optical network node.

In an embodiment, for each optical network node (e.g., the first optical network node), the number of other optical network nodes that can communicate with it is at least one. For the optical network nodes corresponding to the node device 1, the node device i, and the node device n in FIG. 1, the number of other optical network nodes connected thereto is one. For other optical network nodes, for example, the optical network nodes corresponding to the node device 2 and the node device j, the number of other optical network nodes connected thereto is two. For the optical network node corresponding to the node device 3, the number of other optical network nodes connected to the optical network node corresponding to the node device 3 is three.

In an embodiment, the optical signal may be transmitted between the first optical network node and the second optical network node through an optical connection therebetween. On the one hand, when the destination node of the optical signal sent by the second optical network node is the first optical network node, that is, when the second optical network node is to transmit information to the first optical network node, the first optical network node may receive the first optical signal transmitted by the second optical network node based on the optical connection, and convert the first optical signal into the first electrical signal.

On the other hand, when the destination node of the optical signal transmitted by the second optical network node is not the first optical network node, that is, when the first optical network node is a relay node, the first optical network node further processes the first electrical signal to obtain a second electrical signal, converts the second electrical signal into a second optical signal, and transmits the second optical signal to the third optical network node based on the optical connection to the third optical network node.

By adopting the technical solution of the embodiments of the present disclosure, at least one optical communication link is formed through a plurality of optical network nodes, and the optical communication link may be formed between any two optical network nodes in the visible light communication network. Each optical network node (such as the first optical network node) communicates an optical signal through an optical connection to the other optical network node. An intermediate optical network node (which is not a source optical network node firstly transmitting the optical signal and a destination optical network node which the optical signal finally is to reach) can play a relay role to realize the transmission of the optical signal between any two optical network nodes in the visible light communication network, which avoids the problems of a heavy load and high computational complexity of the central node, and difficult network expansion caused by the use of a star network topology.

In an optional embodiment of the present disclosure, as shown in FIG. 1, the visible light communication network further includes a plurality of node devices, and each node device is electrically connected to a corresponding optical network node.

A first node device is configured to receive a third electrical signal transmitted by the first optical network node electrically connected to the first node device, and the third electrical signal is obtained by the first optical network node converting the third optical signal received into an electrical signal.

In an optional embodiment of the present disclosure, the first node device is further configured to transmit a fourth electrical signal to the first optical network node.

The first optical network node is further configured to process the fourth electrical signal, convert the fourth electrical signal processed into a fourth optical signal, and transmit the fourth electrical signal to the other optical network node based on the optical connection between the first optical network node and the other optical network node.

In the embodiment, the process of each optical network node communicating the optical signal with the other optical network node is not simply to receive the optical signal and then forward the received optical signal to the other optical network node, but to receive the optical signal first, convert the received optical signal into an electrical signal, perform certain processing on the electrical signal, and then convert the electrical signal into an optical signal, and finally transmit the optical signal to the other optical network node.

Based on this, each node device is electrically connected to a corresponding optical network node, so as to realize the transmission of electrical signal between the node device and the optical network node. On the one hand, the node device may transmit the electrical signal to the optical network node, so that the node device may import data to the optical network node. On the other hand, the optical network node may also transmit the electrical signal to the node device. For example, in the case that the above-mentioned second optical network node is to transmit information to the first optical network node, the first optical network node may receive a first optical signal transmitted by the second optical network node based on the optical connection, convert the first optical signal into a first electrical signal, then the first optical network node may transmit the first electrical signal to the node device, so as to realize the data export from the optical network node to the corresponding node device.

Based on the foregoing embodiment, FIG. 2 is a schematic structural diagram of an optical network node in a visible light communication network according to an embodiment of the present disclosure. As shown in FIG. 2, the first optical network node includes at least one communication assembly 11, the at least one communication assembly 11 respectively corresponds to the other optical network node optically connected to the first optical network node, and each communication assembly 11 includes a photoelectric conversion module 111, an electrical signal processing module 112 and a light source module 113. In the communication assembly corresponding to the second optical network node:
the photoelectric conversion module 111 is configured to receive the first optical signal, convert the first optical signal into the first electrical signal, and transmit the first electrical signal to the electrical signal processing module 112;
the electrical signal processing module 112 is configured to process the first electrical signal to obtain the second electrical signal, and transmit the second electrical signal to the light source module 113 in the communication assembly corresponding to the third optical network node; and
the light source module 113 is configured to convert the second electrical signal into the second optical signal and transmit the second optical signal.

In an embodiment, each communication assembly 11 is configured to transmit an optical signal to the other corresponding optical network node.

As an example, in the first optical network node, if the communication assembly corresponding to the second optical network node is described as a first communication assembly, and the communication assembly corresponding to the third optical network node is described as a second communication assembly, that is, the first optical network node is respectively connected to the second optical network node and the third optical network node through optical connections, and the first optical network node has two communication assemblies, the photoelectric conversion module in the first communication assembly receives a first optical signal, converts the first optical signal into a first electrical signal, transmits the first electrical signal to the electrical signal processing module in the first communication assembly or the second communication assembly for processing to obtain a second electrical signal, the second electrical signal is transmitted to the light source module in the second communication assembly, and the light source module in the second communication assembly converts the second electrical signal into a second optical signal, and transmits the second optical signal, thereby realizing the relay function of the first optical network node.

In some optional embodiments, the electrical signal processing module may be shared in respective communication assemblies 11, that is, the first optical network node may be provided with the electrical signal processing module 112 and further provided with the photoelectric conversion module 111 and the light source module 113 respectively corresponding to the other optical network node optically connected to the first optical network node, and the electric signals converted by the respective photoelectric conversion modules are processed by the shared electric signal processing module.

In an optional embodiment of the present disclosure, the photoelectric conversion module may be implemented by a PD or an APD, that is, the received optical signal may be converted into an electrical signal by the PD or APD.

In an optional embodiment of the present disclosure, the light source module may be implemented by LED or LD, that is, the light signal may be transmitted by LED or LD.

In the visible light communication network in an embodiment, the light source module is implemented by LED or LD. On the one hand, LED or LD can emit light required for lighting to achieve lighting, and on the other hand, LED or LD can also emit light signal to achieve information transmission. It can be understood that wireless communication may be realized in any range covered by the light.

In an embodiment, the optical alignment is adopted for the optical connection between two optical network nodes. On the one hand, the relative position between two optical network nodes that are optically connected may be set so that the photoelectric conversion module of another optical network node is located on the optical path of the optical signal transmitted by the light source module of one optical network node. On the other hand, since the light emitted by the light source module (such as LED or LD) can cover a large space, the light coverage thereof is related to the light emitting angle of the light source module (such as LED or LD). For the case where the light source module is LED or LD, the light coverage is related to the fiber scattering angle of the LED or LD. Therefore, in the embodiment, the light source module may adjust the emitting angle of the light beam used for transmitting the optical signal within the range of the light emitting angle thereof, so that the photoelectric conversion module of another optical network node can receive the light signal transmitted by the light source module.

In an optional embodiment of the present disclosure, the electrical signal processing module 112 includes an amplifying unit and a light source driving unit.

The amplifying unit is configured to amplify the first electrical signal, and transmit the first electrical signal amplified to the light source driving unit.

The light source driving unit is configured to drive the first electrical signal amplified to obtain the second electrical signal.

In an embodiment, the photoelectrically converted electrical signal is amplified by the amplifying unit, and the amplified electrical signal is driven by the light source driving unit. The driving processing is used to obtain the second electrical signal that meets the power and performance of the light source module and meets the application requirements of visible light communication. In an embodiment, the electrical signal is amplified by the electrical signal processing module 112, which avoids the attenuation of the signal during the transmission process, that is, avoids the attenuation of the optical signal received by the destination optical network node, and ensures the strength of the optical signal received by the destination optical network node.

In an embodiment, the first node device is connected to an output end of the amplifying unit and an input end of the light source driving unit of the first optical network node.

In an embodiment, on the one hand, the first node device is connected to the output end of the amplifying unit of the first optical network node, so that the first node device obtains the amplified electrical signal (for example, the amplified first electrical signal or third electrical signal), and the optical network node can export data to the corresponding node device. On the other hand, the first node device is connected to the input end of the light source driving unit of the first optical network node, so that the first node device may transmit an electrical signal (e.g., the fourth electrical signal) to the first optical network node, and the node device can import data to the optical network node.

The visible light communication network according to an embodiment of the present disclosure will be described below with reference to a specific example.

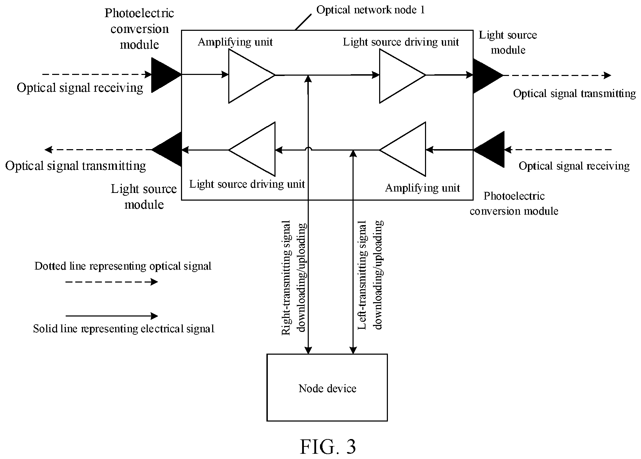

FIG. 3 is a schematic diagram of interaction between an optical network node and a node device in a visible light communication network according to an embodiment of the present disclosure. As shown in FIG. 3, the optical network node 1 in this example includes two communication assemblies, and each communication assembly corresponds to communication with one other optical network node. Each communication assembly may include a photoelectric conversion module, an electrical signal processing module (including an amplifying unit and a light source driver), and a light source module. For example, the sets of the photoelectric conversion module, electrical signal processing module (including the amplification unit and light source driving unit) and light source module on the left and right sides of the optical network node may be distinguished from each other. Each set of the photoelectric conversion module, electrical signal processing module (including the amplifying unit and light source driving unit) and light source module is respectively used to communicate with the other optical network node.

If the components of the communication assembly on the left side are denoted as photoelectric conversion module 1, electrical signal processing module (including amplifying unit and light source driving unit) and light source module 1 to communicate with the optical network node 2, and the components of the communication assembly on the right side are denoted as photoelectric conversion module 2, electrical signal processing module (including amplifying unit and light source driving unit) and light source module 2 to communicate with the optical network node 3, the electrical signal processing modules in the two communication assemblies may be shared, that is, the light source driving units and the amplifying units in the two communication assemblies can be shared. In an example, the photoelectric conversion module 1 may receive the optical signal transmitted by the optical network node 2 and convert the optical signal into an electrical signal, the electrical signal is amplified through the amplifying unit, and the driving processing is performed on the amplified electrical signal, which then is transmitted to the light source module 2, and then is transmitted by the light source module 2 on the right side to the optical network node 3. The processing process of the optical signal transmitted by the optical network node 3 to the optical network node 2 is similar to the above, and will not be repeated here.

In an embodiment, each optical network unit may use an existing network protocol (e.g., Ethernet protocol) to process the received optical signal, so as to ensure no confliction of the optical signal transmitted by the optical network unit and avoid transmission failure. It can be understood that the data carried in the optical signal adopts the format specified in the network protocol, and each optical network unit processes the received or transmitted optical signal based on the specification of the network protocol.

In an example, as shown in FIG. 3, the optical communication network further includes a node device electrically connected to the optical network node 1, and the node device is connected to the output end of the amplifying unit and the input end of the light source driving unit of the optical network node 1. On the one hand, the node device obtains the electrical signal amplified by the amplifying unit, so that the optical network node 1 can export data to the node device. On the other hand, the node device transmits an electrical signal to the light source driving unit, the light source driving unit performs the driving processing on the electrical signal, and then the light source module converts the electrical signal into an optical signal and transmits the optical signal, so that the node device can import data to the optical network node.

The features disclosed in several product embodiments provided in the present disclosure can be combined arbitrarily without conflict to obtain a new product embodiment.

The unit described above as a separate assembly may or may not be physically separated, and the assembly displayed as a unit may or may not be a physical unit, that is, it may be located in one place or distributed to multiple network units. Some or all of the units may be selected according to actual needs to achieve the purpose of the solution in the embodiment.

In addition, each functional unit in each embodiment of the present disclosure may all be integrated into one processing unit, or each unit may be separately used as a unit, or two or more units may be integrated into one unit; the above integrated unit can be implemented either in the form of hardware or in the form of hardware in conjunction with software functional unit.

The above are only specific embodiments of the present disclosure, but the protection scope of the present disclosure is not limited thereto. Any person skilled in the art may easily conceive of changes or substitutions within the technical scope disclosed in the present disclosure, which should be covered by the protection scope of the present disclosure. Therefore, the protection scope of the present disclosure should be subject to the protection scope of the claims.

## Claims

1. A visible light communication network comprising a plurality of optical network nodes, wherein the plurality of optical network nodes form at least one optical communication link, each of the at least one optical communication link comprises at least part of the plurality of optical network nodes, and two adjacent optical network nodes in the optical communication link are connected by an optical connection,
wherein a first optical network node is configured to communicate an optical signal with an other optical network node through an optical connection between the first optical network node and the other optical network node, and
wherein the first optical network node is any optical network node in the optical communication link.

2. The visible light communication network according to claim 1, wherein the optical connection between the two adjacent optical network nodes in the optical communication link comprises one of optical alignment, optical fiber, optical pipe, and dielectric waveguide.

3. The visible light communication network according to claim 1 or 2, wherein the first optical network node is configured to:
receive a first optical signal transmitted by a second optical network node based on an optical connection between the first optical network node and the second optical network node,
convert the first optical signal into a first electrical signal,
process the first electrical signal to obtain a second electrical signal,
convert the second electrical signal into a second optical signal, and
transmit the second optical signal to a third optical network node based on an optical connection between the first optical network and the third optical network node.

4. The visible light communication network according to claim 3, wherein the first optical network node comprises at least one communication assembly, the at least one communication assembly respectively correspond to the other optical network node optically connected to the first optical network node, and each communication assembly comprises a photoelectric conversion module, an electrical signal processing module and a light source module, wherein:
the photoelectric conversion module is configured to receive the first optical signal, convert the first optical signal into the first electrical signal, and transmit the first electrical signal to the electrical signal processing module;
the electrical signal processing module is configured to process the first electrical signal to obtain the second electrical signal, and transmit the second electrical signal to the light source module in the communication assembly corresponding to the third optical network node; and
the light source module is configured to convert the second electrical signal into the second optical signal and transmit the second optical signal.

5. The visible light communication network according to claim 4, wherein the photoelectric conversion module is implemented by a photodiode PD or an avalanche photodiode APD.

6. The visible light communication network according to claim 4, wherein the light source module is implemented by a light emitting diode LED or a laser diode LD.

7. The visible light communication network according to claim 3, wherein the visible light communication network further comprises a plurality of node devices, and each of the plurality of node devices is electrically connected to a corresponding optical network node,
wherein a first node device is configured to receive a third electrical signal transmitted by the first optical network node electrically connected to the first node device, and the third electrical signal is obtained by the first optical network node converting the third optical signal received into an electrical signal.

8. The visible light communication network according to claim 7, wherein the first node device is further configured to transmit a fourth electrical signal to the first optical network node, and
the first optical network node is further configured to process the fourth electrical signal, convert the fourth electrical signal processed into a fourth optical signal, and transmit the fourth electrical signal to the other optical network node based on the optical connection between the first optical network node and the other optical network node.

9. The visible light communication network according to claim 7, wherein the electrical signal processing module comprises an amplifying unit and a light source driving unit; wherein,
the amplifying unit is configured to amplify the first electrical signal, and transmit the first electrical signal amplified to the light source driving unit, and
the light source driving unit is configured to drive the first electrical signal amplified to obtain the second electrical signal.

10. The visible light communication network according to claim 9, wherein the first node device is connected to an output end of the amplifying unit and an input end of the light source driving unit of the first optical network node.
